# EUROPÄISCHE PATENTSCHRIFT

(11) **EP 3 969 768 B1**
(45) Veröffentlichungstag und Bekanntmachung des Hinweises auf die Patenterteilung: **11.10.2023**
(21) Anmeldenummer: 20716385.8
(22) Anmeldetag: 12.03.2020
(51) Int. Cl.: F16C 19/06, F16C 43/08

(54) **VERFAHREN UND VORRICHTUNG ZUR MONTAGE EINES WÄLZLAGERS**
METHOD AND APPARATUS TO ASSEMBLE A ROLLING BEARING
PROCÉDÉ ET APPAREIL POUR L'ASSEMBLAGE D'UN ROULEMENT

(30) Priorität: 16.05.2019 DE 102019112852
(43) Veröffentlichungstag der Anmeldung: 23.03.2022
(73) Patentinhaber: Schaeffler Technologies AG & Co. KG, 91074 Herzogenaurach (DE)
(72) Erfinder: ABRAHAM, Varghese, Vadodara 39007 (IN); JOSHI, Viraj, Surat 395009 (IN); VINDULA, R Naga Bhushanam, Vadodara 39010 (IN); SHAH, Harish, Vadodara 39022 (IN)
(86) Internationale Anmeldenummer: PCT/DE2020/100187
(87) Internationale Veröffentlichungsnummer: WO 2020/228880

(56) Entgegenhaltungen:
- WO-A1-2016/076152
- CN-U- 201 723 600
- GB-A- 837 870
- US-A- 2 633 627

## Beschreibung

Die Erfindung betrifft ein Verfahren zur Montage eines Wälzlagers. Ferner betrifft die Erfindung eine Vorrichtung, welche zur Montage eines Wälzlagers, insbesondere Kugellagers, ausgebildet ist.

Ein gattungsgemäßes Montageverfahren ist beispielsweise aus der DE 10 2014 223 708 A1 bekannt. Es handelt sich dabei um ein Exzentermontageverfahren. Allgemein zeichnet sich ein Exzentermontageverfahren dadurch aus, dass während der Montage ein Lagerinnenring exzentrisch zu einem Lageraußenring positioniert wird, um ein Einfüllen der Wälzkörper, insbesondere Kugeln, zu ermöglichen. Um die Anzahl der einfüllbaren Kugeln zu erhöhen, kann einer der Lagerring elastisch verformt werden. Im Fall der DE 10 2014 223 708 A1 ist die Verformung beider Lagerringe vorgesehen.

Ein Exzentermontageverfahren ist auch in der DE 2 137 979 A beschrieben. Auch in diesem Fall werden Kugeln in einen sichelförmigen Raum zwischen exzentrisch zueinander angeordneten Lagerringen eingefüllt. Im Zuge der anschließenden Zentrierung der Lagerringe kann es zu einer geringen elastischen Verformung des Außenrings oder des Innenrings kommen.

Grundsätzlich ist auch die Möglichkeit gegeben, Wälzkörper durch eine Füllöffnung, welche sich in einem Lagerring befindet, in einen Ringraum zwischen zwei Lagerringen einzufüllen. Im Fall einer aus der EP 2 143 835 B1 bekannten Lagereinrichtung ist die lichte Weite einer Wälzkörpereinfüllausnehmung eines Lagerrings geringfügig kleiner als der Wälzkörperdurchmesser. Erst durch eine elastische Verformung des Lagerrings soll ein Einfüllen der Wälzkörper möglich sein.

Die US 2 633 627 A beschreibt ein Verfahren zur Montage eines Wälzlagers, bei welchem zwei Lagerringe exzentrisch zueinander angeordnet werden und der äußere Ring elastisch verformt wird, um Wälzkörper zwischen den Ringen einzufüllen.

Die WO 2016 / 076 152 A1 und die CN 201 723 600 U offenbaren Verfahren zur Montage eines Kugellagers, bei welchem die Wälzlagerringe exzentrisch zueinander angeordnet und die Kugeln dazwischen eingefüllt werden.

Die GB 837 870 A beschreibt eine Maschine zum automatischen Auswählen und Montieren von Lagerbauteilen.

Der Erfindung liegt die Aufgabe zugrunde, die Montage eines Wälzlagers, insbesondere Rillenkugellagers, gegenüber dem genannten Stand der Technik hinsichtlich einer guten Reproduzierbarkeit des Montageergebnisses, auch unter Bedingungen der Serienfertigung, weiterzuentwickeln.

Diese Aufgabe wird erfindungsgemäß gelöst durch eine Vorrichtung zur Montage eines Wälzlagers gemäß Anspruch 1.

Ebenso wird die Aufgabe gelöst durch ein Verfahren zur Montage eines Wälzlagers gemäß Anspruch 3. Im Folgenden im Zusammenhang mit der Montagevorrichtung erläuterte Ausgestaltungen und Vorteile der Erfindung gelten sinngemäß auch für das Montageverfahren und umgekehrt.

Bei dem zu montierenden Wälzlager handelt es sich insbesondere um ein Rillenkugellager. Das Wälzlager umfasst zwei Lagerringe, welche während der Montage exzentrisch zueinander angeordnet sind. Um die Möglichkeiten der Einfüllung von Wälzkörpern zu ermöglichen, wird in grundsätzlich bekannter Weise mindestens ein Lagerring elastisch verformt. Erfindungsgemäß wird eine zum Zweck der Verformung auf den Lagerring aufgebrachte Kraft in Abhängigkeit von der Dimensionierung des Lagerrings rechnerisch bestimmt.

Durch die rechnerische Bestimmung der auf den Lagerring, typischerweise Lageraußenring, aufzubringenden Kraft kann ein und dieselbe Vorrichtung auf einfache, komfortable und prozesssichere Weise für die Montage verschiedener Wälzlagertypen verwendet werden. Bei jeder Lagerdimensionierung ist der Grad der Verformung des Lagerrings dahingehend optimiert, dass unter Ausschluss des Risikos einer Beschädigung des Lagerrings die Anzahl der im Exzentermontageverfahren eingefüllten Wälzkörper maximiert ist.

Insgesamt umfasst die Montagevorrichtung gemäß Anspruch 1 eine zum Einspannen eines Lageraußenrings ausgebildete Einspannvorrichtung, eine auf die Einspannvorrichtung wirkende Krafterzeugungsvorrichtung, sowie eine mit dieser datentechnisch gekoppelte Kalkulationsvorrichtung, welche zur Berechnung einer durch die Krafterzeugungsvorrichtung auf den Lageraußenring in Abhängigkeit von dessen Dimensionierung aufzubringenden Radialkraft ausgebildet ist, wobei die Krafterzeugungsvorrichtung einen Hebelmechanismus umfasst und der Hebelmechanismus einen Hebel umfasst, welcher mindestens einen Hebelarm mit einer verstellbaren effektiven Hebellänge aufweist.

Die Kalkulationsvorrichtung, welche zur Berechnung der auf den Lageraußenring auszuübenden Radialkraft vorgesehen ist, kann auch zur Speicherung von Daten, mit welchen die Krafterzeugungsvorrichtung zu betreiben ist, ausgebildet sein oder mit einem entsprechenden Datenspeicher verknüpft sein. Unabhängig davon, zu welchem Zeitpunkt und an welcher Stelle die zur Durchführung des erfindungsgemäßen Exzentermontageverfahrens notwendigen Berechnungen durchgeführt werden, können in diese Berechnungen zusätzlich zur Dimensionierung des Wälzlagers weitere Parameter, beispielsweise Materialparameter oder Parameter, welche sich auf den späteren Betrieb des Wälzlagers beziehen, einbezogen werden.

Gemäß einer möglichen Variante der Verfahrensführung startet die elastische Verformung des Lageraußenrings erst, nachdem bereits eine Teilmenge an Wälzkörpern zwischen die Lagerringe eingefüllt wurde und noch eine Restmenge an Wälzkörpern einzufüllen ist. Bei der Restmenge, die noch einzufüllen ist, nachdem der Lagerring in seine elastisch verformte Gestalt gebracht wurde, kann es sich insbesondere um eine einzige Kugel handeln.

Unabhängig davon, in welchen Phasen des Verfahrens welche Verformung des Lagerrings oder der Lagerringe vorgenommen wurde, sind nach der Beendigung des Einfüllvorgangs beide Lagerringe zueinander zu zentrieren. Im zentrierten Zustand werden die Wälzkörper, insbesondere Kugeln, gleichförmig am Umfang der Lagerringe verteilt. Anschließend wird der Wälzkörperkäfig montiert. Hierbei handelt es sich insbesondere um einen Kunststoffschnappkäfig. Alternativ ist auch ein sonstiger Käfig, beispielsweise Blechnietkäfig, zur Führung der Wälzkörper geeignet.

Die Krafterzeugungsvorrichtung, welche der Vorrichtung zur Exzentermontage des Wälzlagers zuzurechnen ist, umfasst erfindungsgemäß einen Hebelmechanismus. Hierbei wirkt typischerweise ein kürzerer Hebelarm auf den zu verformenden Lagerring, wogegen die Krafterzeugungsvorrichtung auf den längeren Hebelarm wirkt. Bei der Krafterzeugungsvorrichtung handelt es sich beispielsweise um eine hydraulische Vorrichtung. Eine solche Vorrichtung ist auch dann in der Montagevorrichtung verwendbar, wenn sie eine fest eingestellte Kraft erzeugt. Erfindungsgemäß wird ein Hebel mit einer verstellbaren effektiven Hebelarmlänge verwendet. Um eine einfache Einstellung und Kontrolle der auf den Lagerring wirkenden Kraft zu ermöglichen, kann an dem entsprechenden Hebelarm eine Längenmarkierung angebracht sein.

Nachfolgend wird ein Ausführungsbeispiel der Erfindung anhand einer Zeichnung näher erläutert. Hierin zeigen:

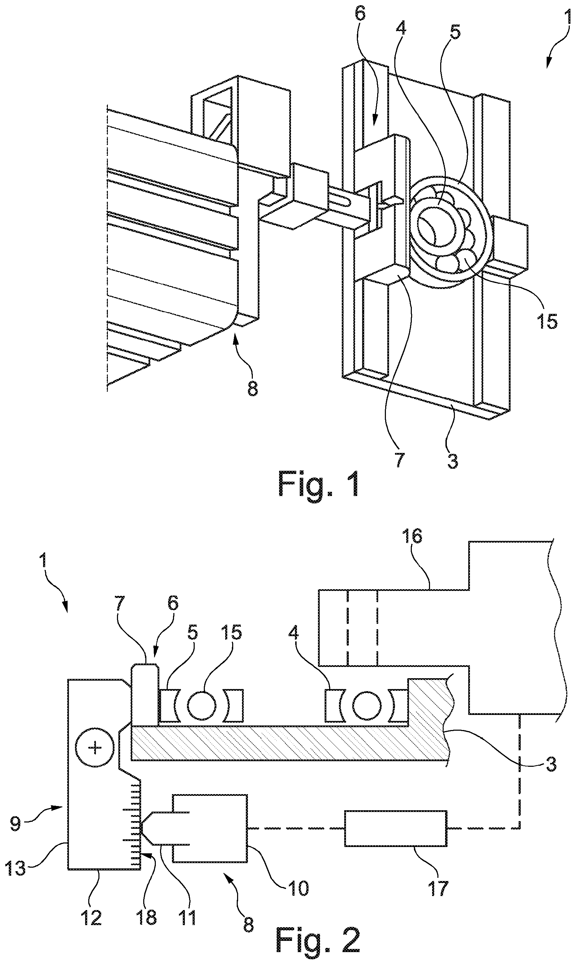

- Fig. 1: eine Vorrichtung zur Exzentermontage eines Wälzlagers in perspektivischer Ansicht,
- Fig. 2: die Vorrichtung nach Figur 1 in einer schematisierten Schnittdarstellung,

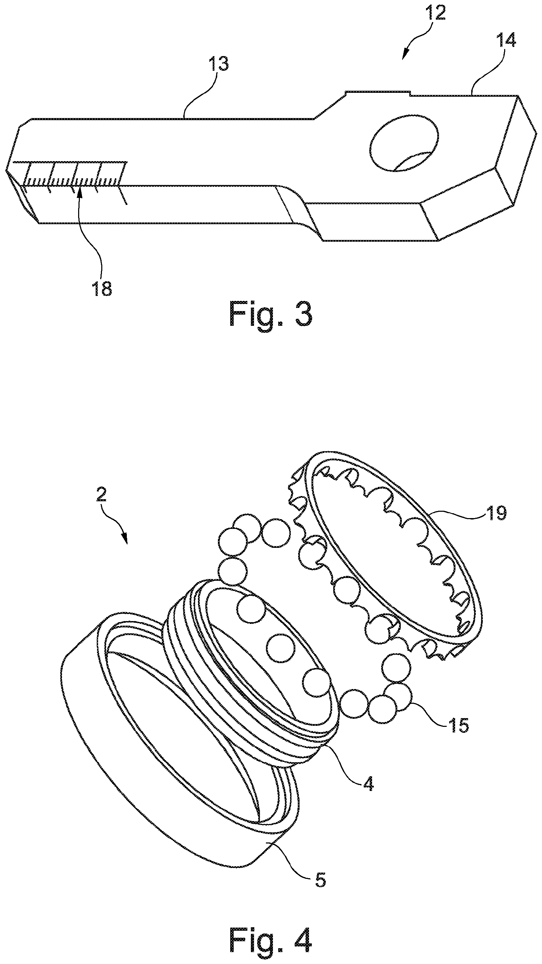

- Fig. 3: ein Einzelteil, nämlich einen Hebel, der Montagevorrichtung in perspektivischer Ansicht,
- Fig. 4: ein mit der Montagevorrichtung zu montierendes Rillenkugellager in einer Explosionsdarstellung.

Ein insgesamt mit dem Bezugszeichen 1 gekennzeichnete Vorrichtung zur Exzentermontage eines Wälzlagers 2, nämlich Rillenkugellagers, umfasst einen Montagetisch 3, auf welchem die Lagerringe 4, 5, das heißt ein Innenring 4 und ein Außenring 5, des Wälzlagers 2 anzuordnen sind. Dem Montagetisch 3 ist eine Einspannvorrichtung 6, welche ein Spannelement 7, das auf den Außenring 5 wirkt, umfasst, zuzurechnen.

Weiter umfasst die Montagevorrichtung 1 eine insgesamt mit 8 bezeichnete Krafterzeugungsvorrichtung. Komponenten der Krafterzeugungsvorrichtung 8 sind ein Hebelmechanismus 9 und ein Druckkrafterzeuger 10, welcher den Hebelmechanismus 9 betätigt. Hierbei wirkt ein Druckelement 11 auf einen Hebel 12, welcher das zentrale Element des Hebelmechanismus 9 darstellt. Das beispielsweise hydraulisch mit einer Kraft beaufschlagte Druckelement 11 greift hierbei an einem Hebelarm 13 des Hebels 12 an. Ein im Vergleich zum Hebelarm 13 kürzerer Hebelarm 14 übt über das Spannelement 7 eine Radialkraft auf den Lageraußenring 5 aus.

Um ein Einfüllen der mit 15 bezeichneten Wälzkörper, das heißt Kugeln, zwischen die Lagerringe 4, 5 zu ermöglichen, wird der Außenring 5 mit Hilfe der auf die Einspannvorrichtung 6 wirkenden Krafterzeugungsvorrichtung 8 elastisch verformt, wobei zugleich der Innenring 4 exzentrisch zum Außenring 5 angeordnet ist. Das Einfüllen der Kugeln 15 erfolgt mit Hilfe einer Füllvorrichtung 16. Die Füllvorrichtung 16 ist datentechnisch ebenso wie der Druckkrafterzeuger 10 mit einer Kalkulationsvorrichtung 17 gekoppelt. Die Kalkulationsvorrichtung 17 ist dazu ausgebildet, in Abhängigkeit von Parametern des zu montierenden Wälzlagers 2, insbesondere in Abhängigkeit von den Abmessungen der Lagerringe 4, 5, die von der Krafterzeugungsvorrichtung 8 aufzubringende Radialkraft, welche den Außenring 5 verformt, zu berechnen. An die Berechnung werden hierbei Anforderungen einer Optimierung gestellt: Einerseits soll eine möglichst hohe Anzahl an Wälzkörpern 15 zwischen die Lagerringe 4, 5 platziert werden. Andererseits ist die Verformung des Außenrings 5 auf einen Bereich zu beschränken, in dem Beschädigungen zuverlässig ausgeschlossen bleiben.

Im Ausführungsbeispiel ist der Druckkrafterzeuger 10 zur Erzeugung einer konstanten Kraft ausgebildet. Diese Kraft wird durch das Druckelement 11 auf den Hebelarm 13 ausgeübt. Um die auf den Außenring 5 wirkende Kraft variieren zu können, ist die effektive Länge des Hebelarms 13 variabel. Am Hebelarm 13 ist eine Längenmarkierung 18 erkennbar, welche eine einfache visuelle Kontrolle erlaubt, an welcher Stelle das Druckelement 11 Kraft in den Hebelarm 13 einleitet. Von daher ist die Längenmarkierung 18 als Skala zu verstehen, welche das bei eingeschaltetem Druckkrafterzeuger 10 im Hebel 12 wirkende Drehmoment und damit die auf den Außenring 5 wirkende Radialkraft angibt.

Nach der Platzierung sämtlicher Kugeln 15 zwischen den Lagerringen 4, 5, der Rückführung des Außenrings 5 in seine ursprüngliche, kreisrunde Form, sowie der äquidistanten Verteilung der Kugeln 15 im Ringraum zwischen den Lagerringen 4, 5 wird in an sich bekannter Weise der Wälzlagerkäfig 19 montiert. Im dargestellten Ausführungsbeispiel handelt es sich bei dem Wälzlagerkäfig 19 um einen Schnappkäfig aus Kunststoff. Optional können des Weiteren nicht dargestellte Dichtungen, welche zwischen den Lagerringen 4, 5 wirksam sind, montiert werden.

### Bezugszeichenliste

1 Vorrichtung zur Exzentermontage
2 Wälzlager, Rillenkugellager
3 Montagetisch
4 Lagerinnenring
5 Lageraußenring
6 Einspannvorrichtung
7 Spannelement
8 Krafterzeugungsvorrichtung
9 Hebelmechanismus
10 Druckkrafterzeuger
11 Druckelement
12 Hebel
13 Hebelarm
14 Hebelarm
15 Kugel, Wälzkörper
16 Füllvorrichtung
17 Kalkulationsvorrichtung
18 Längenmarkierung
19 Wälzlagerkäfig

## Patentansprüche

1. Vorrichtung (1) zur Montage eines Wälzlagers (2) im Exzentermontageverfahren, umfassend eine zum Einspannen eines Lageraußenrings (5) ausgebildete Einspannvorrichtung (6), eine auf die Einspannvorrichtung (6) wirkende Krafterzeugungsvorrichtung (8), sowie eine mit dieser datentechnisch gekoppelte Kalkulationsvorrichtung (17), welche zur Berechnung einer durch die Krafterzeugungsvorrichtung (8) auf den Lageraußenring (5), wenn der Lageraußenring (5) in der Einspannvorrichtung (6) eingespannt ist, in Abhängigkeit von dessen Dimensionierung aufzubringenden Radialkraft ausgebildet ist, wobei die Krafterzeugungsvorrichtung (8) einen Hebelmechanismus (9) umfasst und der Hebelmechanismus (9) einen Hebel (12) umfasst, welcher mindestens einen Hebelarm (13) mit einer verstellbaren effektiven Hebellänge aufweist.

2. Vorrichtung (1) nach Anspruch 1, wobei derjenige Hebelarm (13), dessen effektive Länge verstellbar ist, mit einer Längenmarkierung (18) versehen ist.

3. Verfahren zur Montage eines Wälzlagers (2) mittels einer Vorrichtung nach einem der Ansprüche 1 oder 2, wobei zwei Lagerringe (4, 5) exzentrisch zueinander angeordnet werden und zumindest der Lageraußenring (5) elastisch verformt wird, und wobei eine zum Zweck der Verformung auf den Lagerring (4, 5) aufgebrachte Kraft in Abhängigkeit von der Dimensionierung des Lagerrings (4, 5) rechnerisch bestimmt wird.

4. Verfahren nach Anspruch 3, wobei die elastische Verformung startet, nachdem bereits eine Teilmenge an Wälzkörpern (15) zwischen die Lagerringe (4, 5) eingefüllt wurde und noch eine Restmenge an Wälzkörpern (15) einzufüllen ist.

5. Verfahren nach Anspruch 4, wobei als Restmenge nach der Herstellung der elastisch verformten Gestalt genau ein einziger Wälzkörper (15) eingefüllt wird.

6. Verfahren nach einem der Ansprüche 3 bis 5, wobei zwischen die Lagerringe (4, 5) Kugeln als Wälzkörper (15) eingefüllt werden.

7. Verfahren nach Anspruch 6, wobei die Kugeln (15) nach deren gleichmäßiger Verteilung zwischen den Lagerringen (4, 5) in einen als Kunststoffkäfig (19) ausgebildeten Wälzlagerkäfig eingeschnappt werden.

## Claims

1. An apparatus (1) for assembling a rolling bearing (2) using an eccentric assembly method, comprising a clamping device (6) designed for clamping an outer bearing ring (5), a force-generating device (8) acting on the clamping device (6), and a calculation device (17) that is data-technically coupled to the latter and is designed for calculating a radial force to be applied to the outer bearing ring (5) by the force-generating device (8) when the outer bearing ring (5) is clamped in the clamping device (6), as a function of its dimensioning, wherein the force-generating device (8) comprises a lever mechanism (9) and the lever mechanism (9) comprises a lever (12), which has at least one lever arm (13) with an adjustably effective lever length.

2. The apparatus (1) according to claim 1, wherein each lever arm (13), the effective length of which is adjustable, is provided with a length mark (18).

3. A method for assembling a rolling bearing (2) by means of an apparatus according to any one of claims 1 or 2, wherein two bearing rings (4, 5) are arranged eccentrically relative to one another and at least the outer bearing ring (5) is elastically deformed, and wherein a force applied to the bearing ring (4, 5) for the purpose of deformation is calculated depending on the dimensioning of the bearing ring (4, 5).

4. The method according to claim 3, wherein the elastic deformation starts after a partial quantity of rolling elements (15) has already been filled between the bearing rings (4, 5) and a residual quantity of rolling elements (15) is still to be filled in.

5. The method according to claim 4, wherein exactly one single rolling element (15) is filled in as the residual quantity after the elastically deformed shape has been produced.

6. The method according to any one of claims 3 to 5, wherein balls are filled in between the bearing rings (4, 5) as rolling elements (15).

7. The method according to claim 6, wherein after being evenly distributed between the bearing rings (4, 5), the balls (15) are snapped into a rolling bearing cage formed as a plastic cage (19).

## Revendications

1. Appareil (1) pour l'assemblage d'un roulement (2) selon le procédé de montage par excentrique, comprenant un dispositif de serrage (6) conçu pour serrer une bague externe de roulement (5), un dispositif générateur de force (8) agissant sur le dispositif de serrage (6), ainsi qu'un dispositif de calcul (17) couplé à celui-ci par des données, qui est conçu pour calculer une force radiale à appliquer par le dispositif générateur de force (8) sur la bague externe de roulement (5), lorsque la bague externe de roulement (5) est serrée dans le dispositif de serrage (6), en fonction de son dimensionnement, le dispositif générateur de force (8) comprenant un mécanisme à levier (9) et le mécanisme à levier (9) comprenant un levier (12) qui présente au moins un bras de levier (13) présentant une longueur de levier effective réglable.

2. Appareil (1) selon la revendication 1, dans lequel le bras de levier (13), dont la longueur effective est réglable, est muni d'un repère de longueur (18).

3. Procédé pour l'assemblage d'un roulement (2) au moyen d'un appareil selon l'une quelconque des revendications 1 ou 2, dans lequel deux bagues de roulement (4, 5) sont agencées de manière excentrée l'une par rapport à l'autre et au moins la bague externe de roulement (5) est déformée de manière élastique, et dans lequel une force appliquée sur la bague de roulement (4, 5) dans un but de déformation est déterminée par calcul en fonction du dimensionnement de la bague de roulement (4, 5).

4. Procédé selon la revendication 3, dans lequel la déformation élastique commence après qu'une quantité partielle d'éléments roulants (15) a déjà été introduite entre les bagues de roulement (4, 5) et qu'une quantité restante d'éléments roulants (15) doit encore être introduite.

5. Procédé selon la revendication 4, dans lequel exactement un seul élément roulant (15) est rempli en tant que quantité restante après la fabrication de la forme déformée élastiquement.

6. Procédé selon l'une quelconque des revendications 3 à 5, dans lequel des billes en tant qu'éléments roulants (15) sont introduites entre les bagues de roulement (4, 5).

7. Procédé selon la revendication 6, dans lequel les billes (15), après avoir été régulièrement réparties entre les bagues de roulement (4, 5), sont encliquetées dans une cage de roulement réalisée sous forme de cage en matière plastique (19).
